# EUROPEAN PATENT APPLICATION

(11) **EP 4 645 080 A1**
(43) Date of publication of application: **05.11.2025**
(21) Application number: 23910671.9
(22) Date of filing: 26.12.2023
(51) Int. Cl.: G06F 9/48

(54) **TASK CREATION METHOD AND APPARATUS, AND ELECTRONIC DEVICE**

(30) Priority: 26.12.2022 CN 202211679275
(71) Applicant: Douyin Vision Co., Ltd., Beijing 100041 (CN)
(72) Inventor: ZENG, Xingyuan, Beijing 100028 (CN); LU, Junda, Beijing 100028 (CN)
(74) Representative: Grünecker Patent- und Rechtsanwälte PartG mbB
(86) International application number: PCT/CN2023/142146
(87) International publication number: WO 2024/140750

(57) **Abstract**

Provided is a method, an apparatus, and an electronic device for task creation. The method includes: in response to a creation instruction, generating target task information, wherein the target task information is configured to characterize content of a target task, wherein the target task comprises at least one target task item, and the target task item corresponds to at least one target participating role; determining a corresponding target component based on the target task information, wherein the target component is a pre-generation component configured to implement a function of a target task item; creating a corresponding target task item for the target participating role based on the target component. The disclosure completes task creation for a target participating role, thereby improving the task creation efficiency.

## Description

**This** application claims priority to Chinese Patent Application No. 202211679275.3, filed with the Chinese Patent Office on December 26, 2022 and entitled "TASK CREATION METHOD AND APPARATUS, AND ELECTRONIC DEVICE", which is incorporated herein by reference in its entirety.

### FIELD

Embodiments of the present disclosure relate to the field of internet technologies, and in particular to a task creation method and apparatus, and electronic device.

### BACKGROUND

Currently, in the operation process of internet applications, through dynamically setting various tasks, the interactions between users and a platform as well as among users can be enhanced, thereby increasing the engagement of the user within the application platform.

**In** the related art, various tasks within the application platform usually require application developers to design different tasks for different participating roles, and then respectively write task programs corresponding to the tasks, thereby achieving the goal of creating corresponding tasks for different participating roles.

However, the solution in the related art has the problems of complex task creation process and low creation efficiency.

### SUMMARY

Embodiments of the present disclosure provide a task creation method and apparatus, and an electronic device, to overcome problems of a complex task creation process and low creation efficiency.

According to a first aspect, an embodiment of the present disclosure provides a task creation method, comprising:
In response to a creation instruction, generating target task information, the target task information configured to characterize content of a target task, wherein the target task comprises at least one target task item, and the target task item corresponds to at least one target participating role; determining a corresponding target component based on the target task information, wherein the target component is a pre-generation component configured to implement a function of the target task item; creating a corresponding target task item for the target participating role based on the target component.

According to a second aspect, an embodiment of the present disclosure provides a task creating device, comprising:
A generation module for generating target task information in response to a creation instruction, the target task information configured to characterize the content of a target task, wherein the target task comprises at least one target task item, and the target task item corresponds to at least one target participating role;
A determination module for determining a corresponding target component based on the target task information, wherein the target component is a pre-generation component configured to implement a function of the target task item;
A creating module configured to create a corresponding target task item for the target participating role based on the target component.

According to a third aspect, an embodiment of the present disclosure provides an electronic device, comprising:
A processor and a memory communicatively connected to the processor;
the memory stores a computer execution instruction;
The processor executes the computer execution instruction stored in the memory, to implement the task creation methods of the first aspect and the various possible designs in the first aspect.

According to a fourth aspect, an embodiment of the present disclosure provides a computer readable storage medium. The computer readable storage medium stores a computer execution instruction. when executed by a processor, the computer execution instruction implements the method of the first aspect and various possible task creation methods of the first aspect.

According to a fifth aspect, an embodiment of the present disclosure provides a computer program product, comprising a computer program, and when being executed by a processor, the computer program implements the task creation method according to the first aspect and various possible designs of the first aspect.

### BRIEF DESCRIPTION OF THE DRAWINGS

To describe the technical solutions in the embodiments of the present disclosure or in the prior art more clearly, the following briefly introduces the accompanying drawings required for describing the embodiments or the prior art, Apparently, the accompanying drawings in the following description show some embodiments of the present disclosure, other drawings may also be obtained according to these drawings without creative efforts.
Fig. 1 is an application scenario diagram of a task creation method for a target system according to an embodiment of the present disclosure;
Fig. 2 is a first schematic flowchart of a task creation method according to an embodiment of the present disclosure;
Fig. 3 is a schematic diagram of a relationship between a target task and a target task item according to an embodiment of the present disclosure;
Fig. 4 is a flowchart of specific implementation steps of step S102 in the embodiment shown in Fig. 2;
Fig. 5 is a schematic diagram of a process of determining a target component according to an embodiment of the present disclosure;
Fig. 6 is a flowchart of specific implementation steps of step S103 in the embodiment shown in Fig. 2;
Fig. 7 is a second schematic flowchart of a task creation method according to an embodiment of the present disclosure;
Fig. 8 is a schematic diagram of creating a target task item according to an embodiment of the present disclosure;
Fig. 9 is a third schematic flowchart of a task creation method according to an embodiment of the present disclosure;
Fig. 10 is a flowchart of specific implementation steps of performing, by a corresponding resource transfer component, resource transfer on a target task item corresponding to the target participating role in step S305;
Fig. 11 is a flowchart of specific implementation steps of step S3053 in the embodiment shown in Fig. 10;
Fig. 12 is a structural block diagram of a task creating device according to an embodiment of the present disclosure;
Fig. 13 is a schematic structural diagram of an electronic device according to an embodiment of the present disclosure;
Fig. 14 is a schematic structural diagram of hardware of an electronic device according to an embodiment of the present disclosure.

### DETAILED DESCRIPTION

In order to make objects, technical solutions and advantages of the embodiments of the present disclosure more clearly, the technical solutions in the embodiments of the present disclosure will be described below in a clearly and fully understandable way in connection with the drawings related to the embodiments of the present disclosure. Obviously, the described embodiments are only a part but not all of the embodiments of the present disclosure. All other embodiments obtained by persons of ordinary skill in the art based on the embodiments of the present disclosure without creative efforts shall belong to the scope of protection of the present disclosure.

Application scenarios of the embodiments of the present disclosure will be explained below:

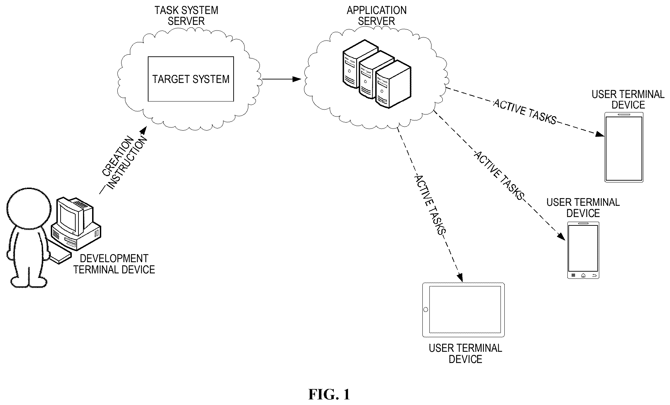

Fig. 1 is an application scenario diagram of a task creation method for a target system provided by an embodiment of the present disclosure. The task creation method for a target system provided by the embodiment of the present disclosure can be applied to application scenarios such as role task creation of an application platform. Specifically, as shown in Fig. 1, the method provided in the embodiment of the present disclosure may be applied to a server or an electronic device with similar functions. The figure shows a task system server, wherein a target system is deployed inside the task system server (or is in communication connection with other servers that deploy the target system, and this case is not shown in the figure), and the target system may be a general task system configured to deploy and design tasks. An application developer sends a task creation instruction to the task system server by operating a development terminal device, such as a personal computer, The task system server creates a task for the target participating role in the target application through the target system, and synchronizing to an application server of a service end deployed with a target application, causing a terminal device of a client running the target application, the task created by the creation instruction can be received and displayed.

In the field of internet technologies, in an operation process of an application platform, creating a task for a user, and issuing a corresponding virtual resource to the user after the user completes the task are common solutions for increasing the participation level of the user with the application platform, for example, "daily check-in tasks" and "daily login tasks" and the like, wherein a role task refers to a personalized task designed for a user having specific roles or privileges, for example, a task designed for a user having a membership benefit. The roles are designed based on specific contents, which are not illustrated one by one herein.

Compared with general-goal tasks (such as daily login tasks and daily check-in tasks) for all users, for role tasks of different user roles, the design and implementation process of the tasks is more complex. In the related art, for various role tasks in an application platform, an application developer usually needs to separately design corresponding tasks for different participating roles according to business requirements, and then respectively write task program codes corresponding to the tasks for deployment, to achieve the goal of creating corresponding tasks for different participating roles.

However, since role tasks are constantly changed and updated according to operation business requirements, and when a new operation business requirement arises each time, the solution in the related art needs the codes to be re-written to implement corresponding task creation, resulting in problems of a complex task creation process and low creation efficiency. Embodiments of the present disclosure provide a task creation method to solve the described problems.

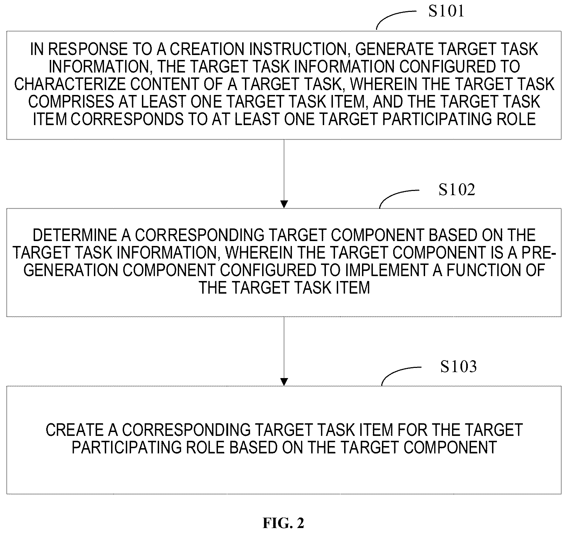

Referring to Fig. 2, Fig. 2 is a first schematic flowchart of a task creation method according to an embodiment of the present disclosure. The method of this embodiment may be applied to a server. The task creation method comprises:
Step S101: in response to a creation instruction, generate target task information, the target task information configured to characterize content of a target task, wherein the target task comprises at least one target task item, and the target task item corresponds to at least one target participating role.

As an example, with reference to a schematic diagram of an application scenario shown in Fig. 1, a target system may be a software system running in a server, and a user accesses the target system through a terminal device and sends a creation instruction. The target system may have a user interface, and the creation instruction may be a corresponding operation instruction generated by a user by performing an operation on the user interface. An operation performed by a user on the user interface may comprise a plurality of operation steps, and an instruction may be created as a set of operation instructions corresponding to various operation steps, The specific implementation form of the creating instruction is related to the interaction mode of the target system, and is not repeated herein.

Furthermore, after receiving the creation instruction, the server generates, based on the content in the creation instruction, target task information that is based on the content characterizing the target task. As an example, the target task information may comprise basic information, and the basic information is configured to characterize a participation condition of the target task. More specifically, for example, the basic information comprises at least one of the following: task open time, task open area, and task open object.

Wherein, exemplarily, the task open time refers to a start time and an end time of the target task, for example, a time interval, and when out of this time interval, the target task is unavailable, and more specifically, for example, the target task is invisible or inoperable on the application client side.

As an example, the task opening area refers to an opening area of the target task, and by setting the task opening area, the target task can be available in a specific area. For example, the task opening area is an area identifier corresponding to the A area, and subsequently, after the target task is created, a user corresponding to the target role in the A area can participate in the target task, while users in other areas cannot participate in the target task.

Furthermore, the basic information can also comprise the name of the target task, the type of the target task, and the like, which can be set according to needs, and will not be described here redundantly.

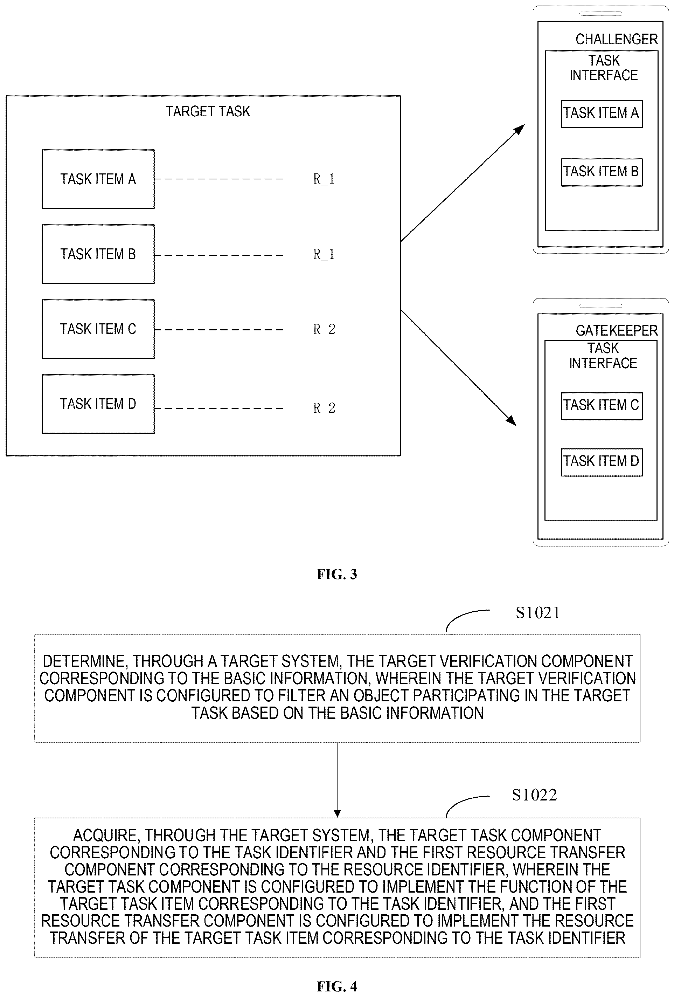

Furthermore, As an example, the target task information further comprises a task parameter, and the task parameter is configured to characterize a specific task item of the target task. Specifically, the task parameters include a task identifier corresponding to the target task item and a resource identity of a resource transfer corresponding to the target task item, wherein the resource may be a physical object or a virtual resource, for example, a point, and the like, and the resource transfer may be that the resource is transferred from the object A to the object B, for example, from one account to another account. The target task comprises one or more target task items. After different target task items (on the client side) are completed, corresponding resource transfer is triggered at the server. The target task items in the target task may correspond to the same target participating role or may correspond to different target participating roles. Fig. 3 is a schematic diagram of a relationship between a target task and a target task item provided in an embodiment of the present disclosure. As shown in Fig. 3, the target task comprises four target task items, for example a task item A, a task item B, a task item C and a task item D, wherein the task item A and the task item B correspond to a target participating role R1, and a role represented by the target participating role is a "challenger"; The task item C and the task item D correspond to the target participating role_2, and represent roles as "gatekeeper". Based on the target task shown in figure 3, after the task is created, two task items will be created for the target participating role R_1 and the target participating role R_2 respectively, and a task item A, a task item B, a task item C and a task item D are displayed in a task interface of a corresponding client.

Furthermore, As an example, after each target task item is completed, corresponding resource transfer may be triggered, for example, sending corresponding electronic credits, virtual resources, and the like to a corresponding target object. Wherein the specific contents of the target task item and the corresponding resource transfer are determined by the task parameters in the target task information.

In the steps of the present embodiment, the process of creating target task information based on a creation instruction is equivalent to the process of creating target task configuration information for implementation, and through the target task information, the specific content of the target task can be determined, comprising each target task item in the target task, an execution sequence between each task item, a corresponding resource transfer mode, and the like.

Step S102: determine a corresponding target component based on the target task information, wherein the target component is a pre-generation component configured to implement a function of the target task item.

As an example, after the target task information is received, based on description information, such as basic information and task parameters, of the target task comprised in the target task information, a corresponding target component is invoked to implement a specific function thereof. The target component is provided by the target system, and more specifically, the target component may be preset in the target system, or the invocation of the target component is implemented through an interface provided by the target system. The target component is a component for implementing content of a target task characterized by target task information, for example, Target tasks, for example, comprise a "challenge task", a "novice task", and the like , and a target component is a component provided by the target system for implementing the described "challenge task" and "novice task", More specifically, for example, the "challenge task" requires the user to complete the accumulated live broadcast time of the target duration, and the "novice task" requires the user to perform an independent live stream once, After the above target task is completed, the system transfers the resources for the users who have completed the task. A component is an encapsulation of data and a method. In the present embodiment, a target component is an abstraction of a method for implementing task items, resource transfer and participation conditions corresponding to the target task in the target system. The target component is provided by the target system; therefore, according to the content in the target task information and according to the mapping relationship between the identifier corresponding to each piece of information in the target task information and the identifier of the target component, the corresponding target component can be determined.

In a possible implementation, as shown in Fig. 4, a specific implementation manner of step S102 comprises:
Step S1021: determine, through a target system, the target verification component corresponding to the basic information, wherein the target verification component is configured to filter an object participating in the target task based on the basic information.

As an example, the target verification component is a component configured to implement a function of screening, based on the basic information, an object participating in a target task, and the target verification component may be, for example, a set of one or more of a method for implementing the function, a function module, and data. The target verification component is preset in the target system or may be directly queried and invoked through the target system. Furthermore, a specific implementation of the described process may be acquiring a component identification characterizing a target verification component by querying a target system based on an information identification corresponding to the basic information.

As an example, before or after step S1021, the method further comprises:
Step S1022: acquire, through the target system, the target task component corresponding to the task identifier and the first resource transfer component corresponding to the resource identifier, wherein the target task component is configured to implement the function of the target task item corresponding to the task identifier, and the first resource transfer component is configured to implement the resource transfer of the target task item corresponding to the task identifier.

As an example, the target task component is a component configured to implement a function of a target task item corresponding to the task identifier, and the target task component may be, for example, a set of one or more of a method, a function module, and data for implementing the function. The target task component is preset in the target system or can be directly queried and invoked through the target system. Furthermore, a specific implementation of the described process of obtaining a target task component may be querying a target system Through a task identifier and obtaining a component identity that represents the target task component.

Similarly, the first resource transfer component is a component for implementing resource transfer of a target task item corresponding to the task identifier, and the first resource transfer component may be, for example, a set of one or more of a method, a functional module and data for implementing the resource transfer. The first resource transfer component is preset in the target system or may be directly queried and invoked through the target system. Furthermore, a specific implementation of the described process of obtaining the first resource transfer component may be: querying a target system Through a resource identifier and obtaining a component identifier that characterize the first resource transfer component.

Wherein, based on the specific content in the target task information, step S1021 and step S1022 can be executed individually, or executed sequentially or synchronously. When a plurality of steps in step S1021 and step S1023 are executed, a specific execution sequence thereof may be set and adjusted according to requirements and is not specifically limited.

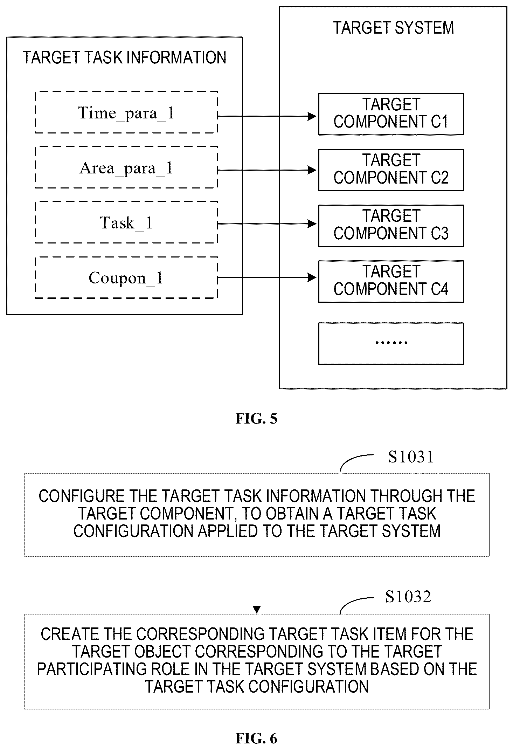

More specifically, Fig. 5 is a schematic diagram of a process for determining a target component according to an embodiment of the present disclosure. As shown in Fig. 5, for example, target task information comprises task opening time Time_para_1, task opening area Area_para_1, task identifier Task_1, and resource identifier Coupon_1. More specifically, for example, the task open time Time_para_1 = [20220301, 20230501], representing March 1, 2022, to May 1, 2023; task open area Area_para_1 = [Asia_a], representing area A; task identifier Task_1 = [10], representing that the content of the task item is "complete 10 live streams"; the resource identifier Coupon_1 = [1000p], indicating that the resource transfer is "deliver 1000 credits". Based on the content in the target task information, querying a target system, and determining a corresponding target component and calling parameters. Specifically, for example, a target component C1 corresponding to the task opening time Time_para_1 is configured to implement a check based on a task opening time, and when the system time is out of the task opening time, the target task item is not displayed; a target component C2 corresponding to the task open area Area_para_1, which is configured to implement a task-open area-based check; when the location of a user terminal device is outside the task open area, the target task item is not displayed; Similarly, a task identifier Task_1 and a resource identifier Coupon_1 respectively correspond to a target component C3 and a target component C4, which are respectively configured to implement a specific function of a target task item and implementing resource transfer corresponding to the target task item, and will not be described repeatedly.

Step S103: create a corresponding target task item for the target participating role based on the target component.

As an example, after a target component is determined, configuration is performed in a target system based on target task information and a corresponding target component, and then a server end of a target application is synchronized, to create a corresponding target task item for a target participating role. As shown in Fig. 6, in a possible implementation manner, the specific implementation step of step S103 comprises:
Step S1031: configure the target task information through the target component, to obtain a target task configuration applied to the target system.

Step S1032: create the corresponding target task item for the target object corresponding to the target participating role in the target system based on the target task configuration.

As an example, after a target component is determined, based on an invocation method of the target component, perform configuration to the first task, to generate configuration information that meets a specific rule and is applied to a target system, that is, the process may be implemented based on a user operation instruction in combination with an interaction interface of the target system, and a specific implementation process is determined based on a man-machine interaction manner of the target system, which is not repeated herein. In the case that the input parameters (the target component and the target task information in this embodiment) are determined, the specific implementation method and principle for configuring and running a system in an automatic or manual manner are the prior art and are not described herein again.

Then, by invoking a corresponding method provided by the target system, the target task described by the target task configuration is synchronized to the server side of the application program, so that the creation of a task item aiming at a target object corresponding to the target participating role can be completed. At the client side of the target object corresponding to the target participating role, a corresponding target task item is displayed in a specified application interface, thereby achieving the goal of dynamically creating a task by the user. Through a correlation between a target task item and a target participating user, a personalized task design corresponding to various roles in an application platform is implemented, thus flexible calling and deployment can be performed according to specific role requirements, thereby implementing an efficient task creation requirement, and improving the task creation efficiency and flexibility in various applications.

In this embodiment, in response to a creation instruction, generate the target task information, wherein the target task information is configured to characterize the contents of a target task, wherein the target task comprises at least one target task item, and the target task item corresponds to at least one target participating role; determine a corresponding target component according to target task information, wherein the target component is a pre-generation component configured to implement a function of a target task item; A corresponding target task item is created for the target participating role based on the target component. Through the target system, target task information characterizing the contents of a target task can be generated, and then the target component provided by the target system is configured to configurate, The function of each task item in the target task is implemented, thereby completing the task creation for the target participating role, program codes do not need to be written separately for different participating roles and corresponding tasks, thereby simplifying a task creation process, Thus, the task creation efficiency is improved.

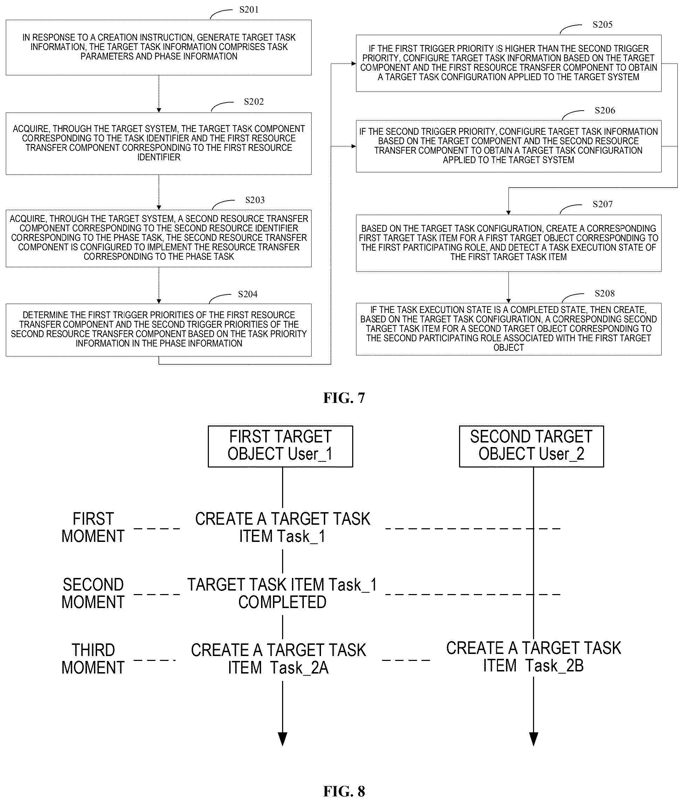

Referring to Fig. 7, Fig. 7 is a second schematic flowchart of a task creation method according to an embodiment of the present disclosure. Based on the embodiment shown in Fig. 2, the present embodiment further comprises details steps S101-S103. The task creation method comprises:
Step S201: in response to a creation instruction, generate target task information, the target task information comprises task parameters and phase information.

Wherein the task parameters comprises a task identifier corresponding to the target task item and a first resource identifier corresponding to the first resource transfer of the target task item; The phase information characterizes at least one phase task and a second resource identifier of a second resource transfer corresponding to the phase task, and the phase task comprises at least two target task items which are executed in sequence.

The specific implementation of the task parameters is described in detail in the embodiment shown in Fig. 2 and is not repeated herein.

As an example, the phase information is information that is in target task information and is configured to indicate a phase task, wherein the phase task refers to a set of a series of target task items that need to be executed in sequence, For example, the phase task S1 comprises a target task item Task_1, a target task item Task_2, and a target task item Task_3, On the client side, the user needs to operate the terminal device to execute the target task item Task_1, the target task item Task_2 and the target task item Task_3 in sequence, That is, before the target task item Task_1 is completed, the target task item Task_2 and the target task item Task_3 cannot be executed; The target task item Task_3 cannot be executed until the target task item Task_1 and the target task item Task_2 are completed.

Furthermore, the phase information further comprises a second resource identifier of a first resource transfer corresponding to the phase task, and the first resource transfer corresponding to the phase task refers to a resource transfer triggered after all target task items in the phase task are completed.

Step S202: acquire, through the target system, the target task component corresponding to the task identifier and the first resource transfer component corresponding to the first resource identifier.

Step S203: acquire, through the target system, a second resource transfer component corresponding to the second resource identifier corresponding to the phase task, the second resource transfer component is configured to implement the resource transfer corresponding to the phase task.

As an example, a specific implementation of obtaining the first resource transfer component and the second resource transfer component in step S202 to step S203 may be implemented by querying a target system based on a correspondence between a first resource identifier and a second resource identifier. For a specific implementation process, reference may be made to related description corresponding to step S102 in the embodiment shown in Fig. 2, and details are not repeatedly described herein.

Step S204: determine the first trigger priorities of the first resource transfer component and the second trigger priorities of the second resource transfer component based on the task priority information in the phase information.

Step S205: in accordance with the determination that the first trigger priority is higher than the second trigger priority, configure target task information based on the target component and the first resource transfer component to obtain a target task configuration applied to the target system.

Step S206: in accordance with the determination that the second trigger priority, configure target task information based on the target component and the second resource transfer component to obtain a target task configuration applied to the target system.

As an example, the phase information further comprises task priority information, where the task priority information is configured to determine trigger priorities of the first resource transfer component and the second resource transfer component. After steps S203 to S204, obtaining two components for implementing resource transfer, for example a first resource transfer component and a second resource transfer component, wherein the first resource transfer component is configured to successively perform resource transfer on each target task item in a phase task, for example after each target task item is completed, triggering resource transfer once; the second resource transfer component is configured to perform overall resource transfer on a phase task, that is, after all target task items in the phase task are completed, resource transfer is triggered once. The two resource transfer manners may be determined according to the trigger priority corresponding to the target task item (the first trigger priority) and the trigger priority corresponding to the phase task (the second trigger priority) that are recorded in the phase information.

Specifically, the task priority information comprises a first trigger priority corresponding to the target task item and a second trigger priority corresponding to the phase task, For example, the first trigger priority and the second trigger priority may be 0 or 1, and when the first trigger priority is 1, when the second trigger priority is 0, the first trigger priority is greater than the second trigger priority, and based on the target component and the first resource transfer component, configuring target task information to obtain a target task configuration applied to a target system, for example performing resource transfer in sequence on each target task item in a phase task. When the first trigger priority is 0 and the second trigger priority is 1, and the first trigger priority is less than the second trigger priority, target task information is configured based on the target component and the second resource transfer component, to obtain a target task configuration applied to a target system, that is, overall resource transfer is performed on each target task item in a phase task. Then, based on the target task configuration, a corresponding target task item is created for the target object corresponding to the target participating role, and a corresponding resource transfer mode is implemented.

In a possible implementation manner, when the first trigger priority is equal to the second trigger priority, a target task configuration generated jointly based on the first resource transfer component and the second resource transfer component, a target task item created based on a target task configuration, and using two resource transfer modes at the same time, for example after each target task item in a phase task is completed, sequentially performing resource transfer for a target task item; After all the target task items in the phase task are completed, the resource transfer for the phase task is performed again.

In this embodiment, a resource transfer mode of a target task item is respectively controlled through task priority information, so that the resource transfer mode of the target task item is flexibly controlled, thereby improving the richness and diversity of the created tasks.

Step S207: based on the target task configuration, create a corresponding first target task item for a first target object corresponding to the first participating role, and detect a task execution state of the first target task item.

Step S208: if the task execution state is a completed state, then create, based on the target task configuration, a corresponding second target task item for a second target object corresponding to the second participating role associated with the first target object

As an example, the first participating role and the second participating role refer to roles having a virtual role relationship in the target task, for example, a "challenger role" and a "gatekeeper role" and the like in a "challenge task". The specific implementation of the first participating role and the second participating role is determined based on the content of a specific task, which will not be exemplified one by one herein.

After the target task configuration is received, firstly, a first target object corresponding to the first participating role (for example, a "challenger role" in a "challenge task") is configured based on the target task, After creating a corresponding first target task item, the server detects the first target task item, After completing the first target task item, the first target object creates a second target task item for the second target object corresponding to the associated second participating role (for example, a role of "gatekeeper" in the "challenge task").

Fig. 8 is a schematic diagram of creating a target task item according to an embodiment of the present disclosure. As shown in Fig. 8, after a target task configuration is obtained, at a first moment, a target task item Task_1 is first created for a first target object User_1 corresponding to the first participating role, and specific content of the target task item Task_1 is "the number of live plays reaches 10 times". Correspondingly, the target task item Task_1 will be displayed on the client page of the terminal device of the first target object User_1, and it will not be described again here. At a second moment, the target task item Task_1 is completed, and thereafter, at a third moment (wherein optionally, the second moment and the third moment may be the same moment), a target task item Task_2A is created for the first target object User_1, and the specific content of the target task item Task_2A is "same live with the instructor for 30 minutes". At the same time, a target task item Task_2B is created for a second target object User_2 corresponding to the guide role associated with the first target object User_1, and the specific content of the target task item Task_2B is "live streaming with students for 30 minutes".

As an example, the first target object and the second target object may be obtained by detecting, through an RPC interface provided by a target system, a user having a role of the first participating role and the second participating role, It should be noted that, in the process of determining the first target object and the second target object, the target task configuration is generated according to target task information, Therefore, based on the specific content of the target task information, the first target object is also influenced by factors such as a region and an invited situation, A specific user screening process may be implemented Through a target verification component, and a specific implementation principle has been introduced in the embodiment shown in Fig. 2, Details are not described herein again.

**In** this embodiment, exemplarity, a target task item corresponding to the first target object is a preset task of a target task item corresponding to the second participating role, and the creation of a subsequent task is triggered by detecting a task execution state of the preset task, thereby implementing an interactive task creation logic, and improving the interactivity and activity between users.

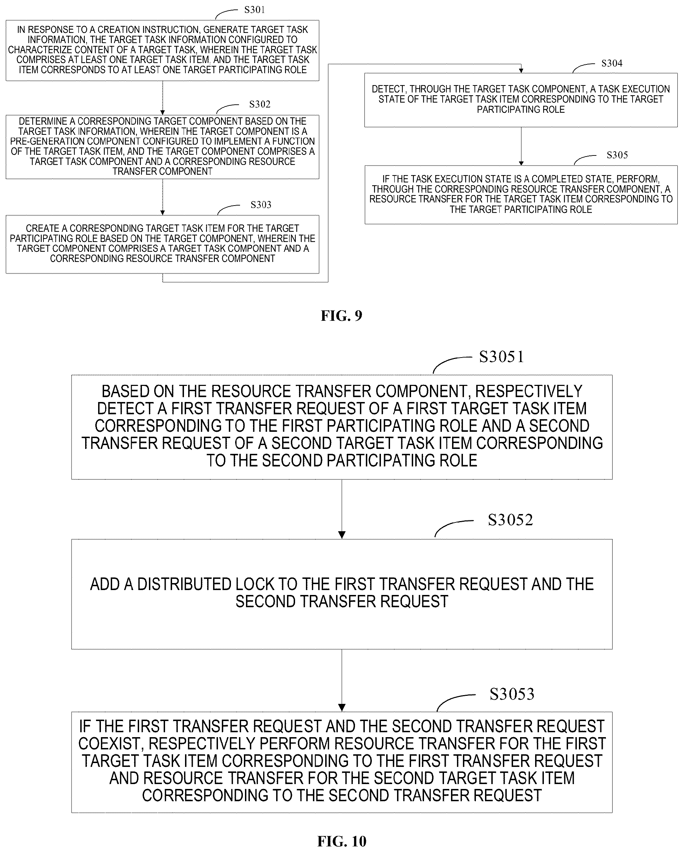

Referring to Fig. 9, Fig. 9 is a third schematic flowchart of a task creation method according to an embodiment of the present disclosure. On the basis of the above embodiments of Figs. 2 and/or 7, the present embodiment adds a process of resource transfer. The task creation method comprises:
Step S301: in response to a creation instruction, generate target task information, the target task information configured to characterize content of a target task, wherein the target task comprises at least one target task item, and the target task item corresponds to at least one target participating role.

Step S302: determine a corresponding target component based on the target task information, wherein the target component is a pre-generation component configured to implement a function of the target task item, and the target component comprises a target task component and a corresponding resource transfer component.

Step S303: create a corresponding target task item for the target participating role based on the target component, wherein the target component comprises a target task component and a corresponding resource transfer component.

As an example, for a specific implementation process of step S301 to step S303, reference may be made to relevant descriptions in the embodiments in Fig. 2 and Fig. 7, and details are not repeatedly described herein.

Step S304: detect, through the target task component, a task execution state of the target task item corresponding to the target participating role.

Step S305: if the task execution state is a completed state, perform, through the corresponding resource transfer component, a resource transfer for the target task item corresponding to the target participating role.

As an example, after the target task item is created for the target participating role, the target object corresponding to the target participating roles on the client side, participating in the target task item; a server detecting a task execution state of the target task item through a target task component provided by a target system, exemplarily, the task execution state is information characterizing the completion progress of the target task item, and the task execution state may be, for example, a first state or a second state, the first state represents that the target task item is completed, and the second state represents that the target task item is not completed. Furthermore, As an example, when the task execution status is a first status, the target task component outputs a transfer request, and the resource transfer component responds based on the transfer request and completes the resource transfer of the target task item corresponding to the target participating role.

In a possible implementation, the target participating roles comprise a first participating role and a corresponding second participating role. As shown in figure 10, the specific implementation steps of performing, through a corresponding resource transfer component, resource transfer on a target task item corresponding to the target participating role in step S305 comprise:

Step S3051: based on the resource transfer component, respectively detect a first transfer request of a first target task item corresponding to the first participating role and a second transfer request of a second target task item corresponding to the second participating role.

Step S3053: if the first transfer request and the second transfer request coexist, respectively perform resource transfer for the first target task item corresponding to the first transfer request and resource transfer for the second target task item corresponding to the second transfer request.

The specific introduction of the first participating role and the corresponding second participating role has been described in detail in the embodiment shown in Fig. 7 and will not be repeated herein. As an example, in a specific application scenario, the first participating role may be, for example, "an apprentice role" in "mentor-apprentice task", the specific content of a first target task item corresponding to the second participating role, such as a "mentor role" in a "mentor-apprentice task" and a " apprentice role", for example, the specific content of a second target task item corresponding to "live streaming together with a mentor and receiving 100 times of audience support" and "a mentor role", such as "live streaming with students and receiving 500 times of audience support". After a first target task item is completed by a first target object corresponding to the first participating role, generate a first transfer request through a corresponding target task component; and after the second target task item is completed by the second target object corresponding to the second participating role, a second transfer request is generated through a corresponding target task component. Only after the resource transfer component respectively detects the first transfer request and the second transfer request, that is, after it is determined that both the first target task item corresponding to the first participating role and the second target task item corresponding to the second participating role have been completed. Perform resource transfer on the first target task item and the second target task item, wherein more specifically, the content of the resource transfer corresponding to the first target task item and the content of the resource transfer corresponding to the first target task item may be the same or different.

In this embodiment, by jointly determining the task execution states of a first target task item corresponding to the first participating role and a second target task item corresponding to the second participating role, and after the task execution states of the two satisfy requirements, resource transfer is performed, thereby implementing interactive resource transfer logic, improving the diversity of task implementation, and enriching user interaction manners.

Optionally, before step S3053, the method further comprises:
Step S3052: A distributed lock is added to the first transfer request and the second transfer request.

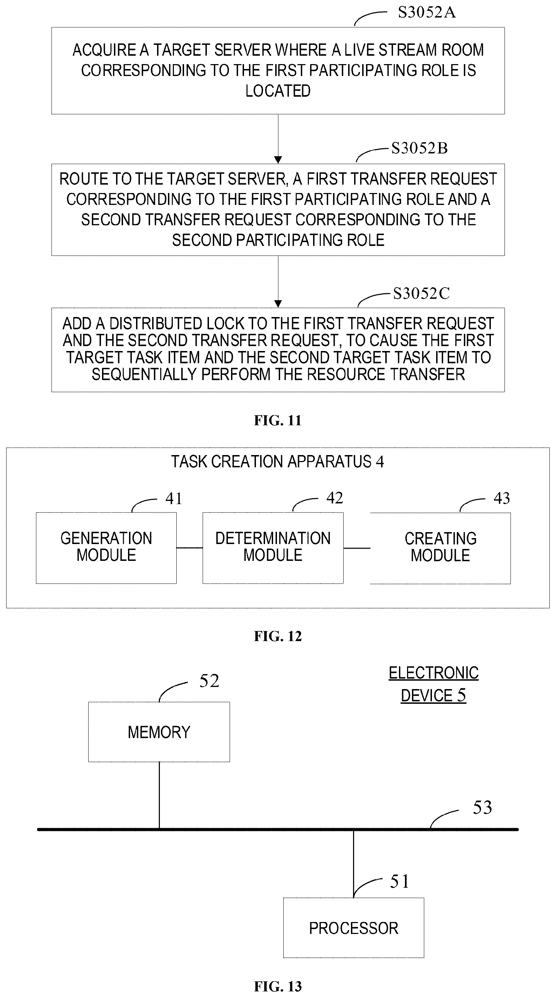

As an example, as shown in Fig. 11, step S3052 specifically comprises:
step S3052A: acquire a target server where a live stream room corresponding to the first participating role is located;
step S3052B: route to the target server, a first transfer request corresponding to the first participating role and a second transfer request corresponding to the second participating role;
Step S3052C: add a distributed lock to the first transfer request and the second transfer request, to cause the first target task item and the second target task item to sequentially perform the resource transfer.

As an example, in a live stream application scenario, when the first participating role and the second participating role need to send the transfer request synchronously, a validity risk exists in concurrent transfer requests, that is, if a plurality of transfer requests are triggered at the same time, resulting an incorrect determination of the task progress, thereby causing an inaccurate update and an inaccurate virtual resource distribution. In this embodiment, a centralized machine room scheme is adopted, and a query for a server where live stream is located when a user is on a streaming can be implemented through object identifications; acquiring a target server or a server cluster (e. g. a machine room) where a live stream room corresponding to the first participating role is located through an interface provided by a target system; and routing all transfer requests of the first participating role and an associated role (a second participating role) to the target server or the server cluster, and then adding distributed locks to ensure the validity of resource transfer. Each transfer request has a unique resource transfer identifier. By changing the resource transfer identifier, we make an exponentiation guarantee. If a resource transfer process encounters an unexpected error, such as a grabbing failure or network timeout, the error is returned to a service (faas, a function as a service) corresponding to the resource transfer, and the transfer request is re-initiated after a period of time is backed off until the resource transfer is successful, thereby guaranteeing the validity of the resource transfer process.

In a possible implementation manner, the distributed lock has a first lock granularity, and the first lock granularity corresponds to an object identifier of a target participating role. Specifically, a target system uses redis as a distributed lock, and the lock granularity is a dimension of an object identifier (UID). That is, at the same time, one user has at most one task type to transfer resources, thereby preventing a validity problem of concurrent resource transfer. A resource transfer identifier carried in a transfer request corresponds to a record of a resource transfer order on a one-to-one basis; a downstream sending virtual resource is called through a resource transfer order number; and when the resource transfer order does not reach a completion state, same can be continuously advanced through an upstream faas service retry until the resource transfer is successful.

Corresponding to the task creation method in the described embodiments, Fig. 12 is a structural block diagram of a task creating device according to an embodiment of the present disclosure. For ease of description, only parts related to the embodiments of the present disclosure are shown. Referring to Fig. 12, the task creating device 4 comprises:
A generation module 41 configured to generate target task information in response to a creation instruction, wherein the target task information is configured to characterize the contents of a target task, the target task comprises at least one target task item, and the target task item corresponds to at least one target participating role;
A determination module 42 for determining a corresponding target component according to target task information, wherein the target component is a pre-generation component for implementing a function of a target task item;
The creating module 43 creates a corresponding target task item for the target participating role based on the target component.

In one embodiment of the present disclosure, the target component comprises a target verification component, the target task information comprises basic information, and the basic information is configured to represent a participation condition of the target task; the basic information comprises at least one of the following: task open time, task open area and task open object; The determination module 42 is specifically configured to determine, through a target system, a target verification component corresponding to the basic information, wherein the target verification component is configured to screen an object participating in a target task based on the basic information.

In one embodiment of the present disclosure, the target component comprises a target task component and a first resource transfer component, the target task information comprises a task parameter, and the task parameter comprises a task identifier corresponding to the target task item and a resource identifier of a corresponding resource transfer of the target task item; The determination module 42 is specifically configured to acquire, through a target system, a target task component corresponding to the task identifier and a first resource transfer component corresponding to the resource identifier, wherein the target task component is configured to implement the function of a target task item corresponding to the task identifier, and the first resource transfer component is configured to implement the resource transfer of the target task item corresponding to the task identifier.

In one embodiment of the present disclosure, the target task information further comprises phase information, wherein the phase information represents at least one phase task and a resource identifier of a resource transfer corresponding to the phase task, and the phase task comprises at least two sequentially executed target task items; After the target task component corresponding to the task identifier and the first resource transfer component corresponding to the resource identifier are acquired through the target system, the determination module 42 is further configured to acquire the second resource transfer component corresponding to the resource identifier of the resource transfer corresponding to the phase task through the target system, and the second resource transfer component is configured to implement the resource transfer corresponding to the phase task.

In an embodiment of the present disclosure, the phase information further comprises task priority information, wherein the task priority information is configured to determine trigger priorities of the first resource transfer component and the second resource transfer component.

In one embodiment of the present disclosure, the creation module 43 is specifically configured to: configure target task information through a target component, to obtain a target task configuration applied to a target system; Based on the target task configuration, a corresponding target task item is created in the target system for a target object corresponding to the target participating role.

In one embodiment of the present disclosure, the target participating role comprises a first participating role and a corresponding second participating role, Based on the target task configuration, the creating module 43 is a target object corresponding to the target participating role in the target system, when creating a corresponding target task item, specifically configured to configure, based on a target task, a first target object corresponding to the first participating role, creating a corresponding first target task item, and detecting a task execution state of the first target task item; If the task execution state is a completed state, a corresponding second target task item is created for a second target object corresponding to the second participating role associated with the first target object based on the target task configuration.

In one embodiment of the present disclosure, a target component comprises a target task component and a corresponding resource transfer component; a creation module 43 is further configured to detect, through the target task component, a task execution state of a target task item corresponding to the target participating role; and if the task execution state is a completed state, performing resource transfer on the target task item corresponding to the target participating role through a corresponding resource transfer component.

In one embodiment of the present disclosure, the target participating role comprises a first participating role and a corresponding second participating role, When performing the resource transfer on the target task item corresponding to the target participating role through the corresponding resource transfer component, specifically configured to based on a resource transfer component, respectively detect a first transfer request of a first target task item corresponding to the first participating role and a second transfer request of a second target task item corresponding to the second participating role. If the first transfer request and the second transfer request coexist, the resource transfer is performed respectively on the first target task item corresponding to the first transfer request and the second target task item corresponding to the second transfer request.

In one embodiment of the present disclosure, before performing the resource transfer respectively on the first target task item corresponding to the first transfer request and the second target task item corresponding to the second transfer request, the creating module 43 is further configured to: obtain a target server where the live broadcast time corresponding to the first participating role is located; route the first transfer request corresponding to the first participating role and the second transfer request corresponding to the second participating role to the target server; add a distributed lock to the first transfer request and the second transfer request, so that the first target task item and the second target task item sequentially transfer resources.

In one embodiment of the present disclosure, the distributed lock has a first lock grain size corresponding to the object identification of the target participating role.

The generating module 41, the determining module 42, and the creating module 43 are connected in sequence. The task creating device 4 provided in this embodiment can execute the technical solutions of the described method embodiments. The implementation principle and technical effect are similar and are not repeatedly described herein in this embodiment.

Fig. 13 is a schematic structural diagram of an electronic device according to an embodiment of the present disclosure. As shown in Fig. 13, the electronic device 5 comprises:
A processor 51, and a memory 52 in communication connection with the processor 51;
The memory 52 stores a computer execution instruction;
The processor 51 executes the computer execution instruction stored by the memory 52, to implement the task creation method in the embodiment shown in Fig. 2 to Fig. 11.

Optionally, the processor 51 and the memory 52 are connected through a bus 53.

The related descriptions can be understood with reference to the related descriptions and effects corresponding to the steps in the embodiments corresponding to Fig. 2 to Fig. 11 and are not repeated herein.

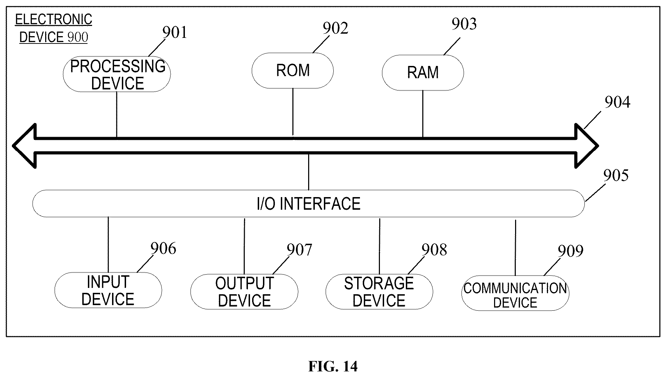

Referring to Fig. 14, it shows a schematic structural diagram of an electronic device 900 suitable for implementing an embodiment of the present disclosure. The electronic device 900 may be a terminal device or a server. The terminal device may include, but is not limited to, a mobile terminal such as a mobile phone, a laptop computer, a digital broadcast receiver, a personal digital assistant (Personal Digital Assistant, PDA for short), a tablet computer (Portable Android Device, PAD for short), a portable multimedia player (Portable Media Player, PMP for short), a vehicle-mounted terminal (for example, a vehicle-mounted navigation terminal), and the like, and a fixed terminal such as a digital TV, a desktop computer, and the like. The electronic device shown in Fig. 14 is merely an example and should not bring any limitation to the functions and scope of use of the embodiments of the present disclosure.

As shown in Fig. 14, electronic device 900 may include processing means (e. g., a central processor unit, graphics processor, and the like) 901 that may perform various suitable actions and processes in accordance with a program stored in read only memory (ROM) 902 or a program loaded into random access memory (RAM) 903 from storage 908. In the RAM 903, various programs and data necessary for the operation of the electronic device 900 are also stored. The processing apparatus 901, the ROM 902, and the RAM 903 are connected to each other through a bus 904. An input/output (I/O) interface 905 is also connected to the bus 904.

In general, the following devices may be connected to the I/O interface 905: an input device 906 comprising, for example, a touch screen, a touch pad, a keyboard, a mouse, a camera, a microphone, an accelerometer, a gyroscope, or the like; an output device 907 comprising, for example, a liquid crystal display (LCD), a speaker, a vibrator, or the like; a storage device 908 comprising, for example, a magnetic tape, a hard disk, or the like; and a communication device 909. Communication device 909 may allow electronic device 900 to communicate wirelessly or wired with other devices to exchange data. While Fig. 14 illustrates an electronic device 900 with a variety of devices, it should be understood that it is not required that all of the illustrated devices be implemented or provided. More or fewer devices may alternatively be implemented or provided.

In particular, the processes described above with reference to the flowcharts can be implemented as computer software programs in accordance with embodiments of the present disclosure. For example, embodiments of the present disclosure include a computer program product comprising a computer program carried on a computer readable medium. The computer program comprises a program code for executing the method as shown in the flowchart. In such an embodiment, the computer program may be downloaded and installed from the network through communications device 909, or installed from storage device 908, or installed from ROM 902. When the computer program is executed by the processing apparatus 901, the above-described functions defined in the method of embodiments of the present disclosure are executed.

It should be noted that the computer readable medium in the present disclosure may be a computer readable signal medium or a computer readable storage medium, or any combination thereof. A computerreadable storage medium may be, for example, but not limited to, an electronic, magnetic, optical, electromagnetic, infrared, or semiconductor system, apparatus, or device, or any suitable combination of the described. More specific examples of the computer readable storage medium may include, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the described. In the present disclosure, a computer readable storage medium may be any tangible medium that can contain or store a program for use by or in connection with an instruction execution system, apparatus, or device. While in the present disclosure, a computer readable signal medium may include a propagated data signal with computer readable program code embodied therein, for example, in baseband or as part of a carrier wave. Such a propagated signal may take any of a variety of forms, comprising, but not limited to, electro-magnetic, optical, or any suitable combination thereof. A computer readable signal medium may also be any computer readable medium that is not a computer readable storage medium and that can communicate, propagate, or transport a program for use by or in connection with an instruction execution system, apparatus, or device. Program code embodied on a computer readable medium may be transmitted using any appropriate medium, comprising, but not limited to, wireline, optical fiber cable, RF (radio frequency), and the like, or any suitable combination of the described.

The computer readable medium may be comprised in the electronic device or may exist separately and not be installed in the electronic device.

The computer readable medium bears one or more programs, and when the one or more programs are executed by the electronic device, the electronic device is enabled to execute the method shown in the described embodiments.

Computer program code for carrying out operations for aspects of the present disclosure may be written in any combination of one or more programming languages, comprising an object-oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, comprising a local area network (LAN) or a wide area network (WAN), or the connection may be made to an external computer (for example, through the Internet using an Internet Service Provider).

The flowchart and block diagrams in the Figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special goal hardware-based systems that perform the specified functions or acts, or combinations of special goal hardware and computer instructions.

The units involved in the embodiments of the present disclosure may be implemented through software or hardware. The name of a unit does not constitute a limitation to the unit itself in some cases, for example, the first acquisition unit may also be described as "unit to acquire at least two internet protocol addresses".

The functions described herein above may be performed, at least in part, by one or more hardware logic components. For example, without limitation, exemplary types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), and the like

In the context of this disclosure, a machine-readable medium may be tangible media that may contain or store a program for use by or in connection with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the described. More specific examples of machine-readable storage media would include an electrical connection based on one or more wires, a portable computer diskette, a hard disk, a random access memory (RAM), a read-only memory (ROM), an erasable programmable read-only memory (EPROM or Flash memory), an optical fiber, a compact disc read-only memory (CD-ROM), an optical storage device, a magnetic storage device, or any suitable combination of the described.

According to a first aspect, according to one or more embodiments of the present disclosure, there is provided a task creation method, comprising:
in response to a creation instruction, generating target task information, the target task information configured to characterize content of a target task, wherein the target task comprises at least one target task item, and the target task item corresponds to at least one target participating role; determining a corresponding target component based on the target task information, wherein the target component is a pre-generation component configured to implement a function of the target task item; creating a corresponding target task item for the target participating role based on the target component..

According to one or more embodiments of the present disclosure, the target component comprises a target verification component, the target task information comprises basic information, and the basic information is configured characterize a participation condition of the target task; the basic information comprises at least one type of: task open time, task open area, and task open object; wherein determining the corresponding target component according to the target task information comprises: determining, through a target system, the target verification component corresponding to the basic information, wherein the target verification component is configured to filter an object participating in the target task based on the basic information.

According to one or more embodiments of the present disclosure, the target component comprises a target task component and a first resource transfer component, and the target task information comprises a task parameter, and the task parameter comprises a task identifier corresponding to the target task item and a resource identifier corresponding to the resource transfer of the target task item; wherein determining the corresponding target component according to the target task information comprises: acquiring, through a target system, the target task component corresponding to the task identifier and the first resource transfer component corresponding to the resource identifier, wherein the target task component is configured to implement the function of the target task item corresponding to the task identifier, and the first resource transfer component is configured to implement the resource transfer of the target task item corresponding to the task identifier.

According to one or more embodiments of the present disclosure, the target task information further comprises phase information, the phase information characterizing at least one phase task and a resource identifier of a resource transfer corresponding to the phase task, wherein the phase task comprises at least two sequentially executed target task items; after acquiring, through the target system, the target task component corresponding to the task identifier and the first resource transfer component corresponding to the resource identifier, further comprising: acquiring, through the target system, a second resource transfer component corresponding to the resource identifier of the resource transfer corresponding to the phase task, the second resource transfer component is configured to implement the resource transfer corresponding to the phase task..

According to one or more embodiments of the present disclosure, the phase information further comprises task priority information, the task priority information configured to determine trigger priorities of the first resource transfer component and the second resource transfer component..

According to one or more embodiments of the present disclosure, creating, based on the target component, the corresponding target task item for the target participating role comprises: configuring the target task information through the target component, to obtain a target task configuration applied to a target system; creating the corresponding target task item for a target object corresponding to the target participating role in a target system based on the target task configuration.

According to one or more embodiments of the present disclosure, the target participating role comprises a first participating role and a corresponding second participating role, and creating the corresponding target task item for the target object corresponding to the target participating role in the target system based on the target task configuration comprises: based on the target task configuration, creating a corresponding first target task item for a first target object corresponding to the first participating role, and detecting a task execution state of the first target task item; if the task execution state is a completed state, then creating, based on the target task configuration, a corresponding second target task item for a second target object corresponding to the second participating role associated with the first target object.

According to one or more embodiments of the present disclosure, the target component comprises a target task component and a corresponding resource transfer component, the method further comprises: detecting, through the target task component, a task execution state of the target task item corresponding to the target participating role; if the task execution state is a completed state, performing, through the corresponding resource transfer component, a resource transfer for the target task item corresponding to the target participating role.

According to one or more embodiments of the present disclosure, the at least one target participating role comprises a first participating role and a corresponding second participating role, and performing, through the corresponding resource transfer component, the resource transfer for the target task item corresponding to the target participating role comprises: based on the resource transfer component, respectively detecting a first transfer request of a first target task item corresponding to the first participating role and a second transfer request of a second target task item corresponding to the second participating role; if the first transfer request and the second transfer request coexist, respectively performing resource transfer for the first target task item corresponding to the first transfer request and resource transfer for the second target task item corresponding to the second transfer request.

According to one or more embodiments of the present disclosure, before respectively performing the resource transfer for the first target task item corresponding to the first transfer request and the resource transfer for the second target task item corresponding to the second transfer request, further comprising: acquiring a target server where a live stream room corresponding to the first participating role is located; routing to the target server, a first transfer request corresponding to the first participating role and a second transfer request corresponding to the second participating role; adding a distributed lock to the first transfer request and the second transfer request, to cause the first target task item and the second target task item to sequentially perform the resource transfer.

According to one or more embodiments of the present disclosure, the distributed lock is with a first lock granularity, the first lock granularity corresponding to an object identification of the target participating role.

According to a second aspect, in one or more embodiments of the present disclosure, an apparatus for task creation is provided, comprising:
A generation module for generating target task information in response to a creation instruction, the target task information configured to characterize the content of a target task, wherein the target task comprises at least one target task item, and the target task item corresponds to at least one target participating role;
A determination module for determining a corresponding target component based on the target task information, wherein the target component is a pre-generation component configured to implement a function of the target task item;
A creating module configured to create a corresponding target task item for the target participating role based on the target component.

According to one or more embodiments of the present disclosure, the target component comprises a target verification component, the target task information comprises basic information, and the basic information is configured to characterize a participation condition of the target task; the basic information comprises at least one of the following: task open time, task open area and task open object; The determination module is specifically configured to determine, through the target system, a target verification component corresponding to the basic information, wherein the target verification component is configured to screen, based on the basic information, an object participating in the target task.

According to one or more embodiments of the present disclosure, the target component comprises a target task component and a first resource transfer component, and the target task information comprises a task parameter, and the task parameter comprises a task identifier corresponding to the target task item and a resource identifier of a corresponding resource transfer of the target task item; the determination module is specifically configured to acquire, through the target system, a target task component corresponding to the task identifier and a first resource transfer component corresponding to the resource identifier, wherein the target task component is configured to implement the function of a target task item corresponding to the task identifier, and the first resource transfer component is configured to implement the resource transfer of the target task item corresponding to the task identifier.

According to one or more embodiments of the present disclosure, the target task information further comprises phase information, the phase information characterizing at least one phase task and a resource identifier of a resource transfer corresponding to the phase task, wherein the phase task comprises at least two sequentially executed target task items; After acquiring through the target system, the target task component corresponding to the task identifier and the first resource transfer component corresponding to the resource identifier, the determination module is further configured to acquire, through the target system, a second resource transfer component corresponding to the resource identifier of a resource transfer corresponding to the phase task, the second resource transfer component is configured to implement resource transfer corresponding to the phase task.

According to one or more embodiments of the present disclosure, the phase information further comprises task priority information, and the task priority information is configured to determine trigger priorities of the first resource transfer component and the second resource transfer component.

According to one or more embodiments of the present disclosure, the creating module is specifically configured to configurate the target task information through the target component, to obtain a target task configuration applied to the target system; create a corresponding target task item for a target object corresponding to the target participating role in the target system based on the target task configuration.

According to one or more embodiments of the present disclosure, the target participating roles include a first participating role and a corresponding second participating role. The creating module is configured, based on the target task, to be a target object corresponding to the target participating role in the target system, when creating a corresponding target task item, specifically configured to configure, based on the target task, a first target object corresponding to the first participating role, create a corresponding first target task item, and detect a task execution state of the first target task item; If the task execution state is a completed state, a corresponding second target task item is created for a second target object corresponding to the second participating role associated with the first target object based on the target task configuration.

According to one or more embodiments of the present disclosure, the target component comprises a target task component and a corresponding resource transfer component, and the creating module is further configured to detect, through the target task component, a task execution state of a target task item corresponding to the target participating role; and if the task execution state is a completed state, perform, through a corresponding resource transfer component, resource transfer on the target task item corresponding to the target participating role.

According to one or more embodiments of the present disclosure, the target participating roles include a first participating role and a corresponding second participating role, when performing the resource transfer for the target task item corresponding to the target participating role through a corresponding resource transfer component, specifically configured to: based on the resource transfer component, respectively detect a first transfer request of a first target task item corresponding to the first participating role and a second transfer request of a second target task item corresponding to the second participating role; if the first transfer request and the second transfer request coexist, respectively perform the resource transfer on the first target task item corresponding to the first transfer request and the second target task item corresponding to the second transfer request.

According to one or more embodiments of the present disclosure, before performing the resource transfer respectively on the first target task item corresponding to the first transfer request and the second target task item corresponding to the second transfer request, the creating module is further configured to: acquire a target server where a live broadcast station corresponding to the first participating role is located; routing a first transfer request corresponding to the first participating role and a second transfer request corresponding to the second participating role to the target server; adding a distributed lock to the first transfer request and the second transfer request, so that the first target task item and the second target task item sequentially transfer resources.

According to one or more embodiments of the present disclosure, the distributed lock has a first lock grain size, and the first lock grain size corresponds to an object identity of the target participating role.

According to a third aspect, according to one or more embodiments of the present disclosure, there is provided an electronic device, comprising: a processor and a memory in communication connection with the processor;
The memory stores a computer execution instruction;
The processor executes the computer execution instruction stored in the memory, to implement the task creation methods described in the first aspect and various possible designs in the first aspect.

According to a fourth aspect, according to one or more embodiments of the present disclosure, a computer readable storage medium is provided. The computer readable storage medium stores a computer execution instruction. When a processor executes the computer execution instruction, the task creation method according to the first aspect and various possible designs of the first aspect is implemented.

According to a fifth aspect, an embodiment of the present disclosure provides a computer program product, comprising a computer program, and when being executed by a processor, the computer program implements the task creation method according to the first aspect and various possible designs of the first aspect.

The described description is merely illustrative of the preferred embodiments of the present disclosure and of the technical principles applied thereto, as will be appreciated by those skilled in the art, The disclosure of the present disclosure is not limited to the technical solution formed by the specific combination of the described technical features, At the same time, it should also cover other technical solutions formed by any combination of the described technical features or equivalent features thereof without departing from the described disclosed concept. For example, the above features and technical features having similar functions disclosed in the present disclosure (but not limited thereto) are replaced with each other to form a technical solution.

In addition, while operations are depicted in a particular order, this should not be understood as requiring that the operations be performed in the particular order shown or in sequential order. Multitasking and parallel processing may be advantageous in certain circumstances. Likewise, while several specific implementation details are comprised in the above discussion, these should not be construed as limiting the scope of the present disclosure. Certain features that are described in the context of separate embodiments can also be implemented in combination in a single embodiment. Conversely, various features that are described in the context of a single embodiment can also be implemented in multiple embodiments separately or in any suitable sub combination.

Although the subject matter has been described in language specific to structural features and/or methodological acts, it is to be understood that the subject matter defined in the appended claims is not necessarily limited to the specific features or acts described above. Rather, the specific features and acts described above are merely exemplary forms of implementing the claims.

## Claims

1. A method for task creation, comprising:
in response to a creation instruction, generating target task information, the target task information configured to characterize content of a target task, wherein the target task comprises at least one target task item, and the target task item corresponds to at least one target participating role;
determining a corresponding target component based on the target task information, wherein the target component is a pre-generation component configured to implement a function of the target task item;
creating a corresponding target task item for the target participating role based on the target component.

2. The method of claim 1, wherein the target component comprises a target verification component, the target task information comprises basic information, and the basic information is configured to characterize a participation condition of the target task; the basic information comprises at least one type of:
task open time, task open area, and task open object;
wherein determining the corresponding target component according to the target task information comprises:
determining, through a target system, the target verification component corresponding to the basic information, wherein the target verification component is configured to filter an object participating in the target task based on the basic information.

3. The method of claim 1, wherein the target component comprises a target task component and a first resource transfer component, and the target task information comprises a task parameter, and the task parameter comprises a task identifier corresponding to the target task item and a resource identifier corresponding to the resource transfer of the target task item;
wherein determining the corresponding target component according to the target task information comprises:
acquiring, through a target system, the target task component corresponding to the task identifier and the first resource transfer component corresponding to the resource identifier, wherein the target task component is configured to implement the function of the target task item corresponding to the task identifier, and the first resource transfer component is configured to implement the resource transfer of the target task item corresponding to the task identifier.

4. The method of claim 3, wherein the target task information further comprises phase information, the phase information characterizing at least one phase task and a resource identifier of a resource transfer corresponding to the phase task, wherein the phase task comprises at least two sequentially executed target task items;
after acquiring, through the target system, the target task component corresponding to the task identifier and the first resource transfer component corresponding to the resource identifier, further comprising:
acquiring, through the target system, a second resource transfer component corresponding to the resource identifier of the resource transfer corresponding to the phase task, the second resource transfer component is configured to implement the resource transfer corresponding to the phase task.

5. The method of claim 4, wherein the phase information further comprises task priority information, the task priority information configured to determine trigger priorities of the first resource transfer component and the second resource transfer component.

6. The method of claim 1, wherein creating, based on the target component, the corresponding target task item for the target participating role comprises:
configuring the target task information through the target component, to obtain a target task configuration applied to a target system;
creating the corresponding target task item for a target object corresponding to the target participating role in a target system based on the target task configuration.

7. The method of claim 6, wherein the target participating role comprises a first participating role and a corresponding second participating role, and creating the corresponding target task item for the target object corresponding to the target participating role in the target system based on the target task configuration comprises:
based on the target task configuration, creating a corresponding first target task item for a first target object corresponding to the first participating role, and detecting a task execution state of the first target task item;
if the task execution state is a completed state, then creating, based on the target task configuration, a corresponding second target task item for a second target object corresponding to the second participating role associated with the first target object.

8. The method of claim 1, wherein the target component comprises a target task component and a corresponding resource transfer component, the method further comprises:
detecting, through the target task component, a task execution state of the target task item corresponding to the target participating role;
if the task execution state is a completed state, performing, through the corresponding resource transfer component, a resource transfer for the target task item corresponding to the target participating role.

9. The method of claim 8, wherein the at least one target participating role comprises a first participating role and a corresponding second participating role, and performing, through the corresponding resource transfer component, the resource transfer for the target task item corresponding to the target participating role comprises:
based on the resource transfer component, respectively detecting a first transfer request of a first target task item corresponding to the first participating role and a second transfer request of a second target task item corresponding to the second participating role;
if the first transfer request and the second transfer request coexist, respectively performing resource transfer for the first target task item corresponding to the first transfer request and resource transfer for the second target task item corresponding to the second transfer request.

10. The method of claim 9, wherein before respectively performing the resource transfer for the first target task item corresponding to the first transfer request and the resource transfer for the second target task item corresponding to the second transfer request, further comprising:
acquiring a target server where a live stream room corresponding to the first participating role is located;
routing to the target server, a first transfer request corresponding to the first participating role and a second transfer request corresponding to the second participating role;
adding a distributed lock to the first transfer request and the second transfer request, to cause the first target task item and the second target task item to sequentially perform the resource transfer.

11. The method of claim 10, wherein the distributed lock is with a first lock granularity, the first lock granularity corresponding to an object identification of the target participating role.

12. An apparatus for task creation , comprising:
a generation module for generating target task information in response to a creation instruction, the target task information configured to characterize the content of a target task, wherein the target task comprises at least one target task item, and the target task item corresponds to at least one target participating role;
a determination module for determining a corresponding target component based on the target task information, wherein the target component is a pre-generation component configured to implement a function of the target task item;
a creating module configured to create a corresponding target task item for the target participating role based on the target component.

13. An electronic device, comprising: a processor, and a memory in communication connection with the processor;
the memory stores a computer execution instruction;
the processor executes the computer execution instruction stored in the memory, to implement the method for task creation of any one of claims 1 to 11.

14. A computer readable storage medium, the computer readable storage medium stores a computer execution instruction, when executed by a processor, the computer execution instruction implements the method for task creation of any one of claims 1 to 11.

15. A computer program product comprising a computer program which, when executed by a processor, implements the method for task creation of any one of claims 1 to 11.
